# EUROPEAN PATENT APPLICATION

(11) **EP 2 736 289 A2**
(43) Date of publication of application: **28.05.2014**
(21) Application number: 13275154.6
(22) Date of filing: 03.07.2013
(51) Int. Cl.: H04W 52/02

(54) **Integrated circuit, mobile terminal including the same, and method of controlling mobile terminal**

(30) Priority: 26.11.2012 KR 20120134506; 22.04.2013 KR 20130044146
(71) Applicant: Samsung Electro-Mechanics Co., Ltd, Suwon, Gyunggi-Do (KR)
(72) Inventor: Cho, Koon Shik, Gyunggi-do (KR); Aum, Jae Goon, Gyunggi-do (KR); Park, Tah Joon, Gyunggi-do (KR)
(74) Representative: Potter Clarkson LLP

(57) **Abstract**

There is provided a mobile terminal including: a wireless communications unit having a first cell type and transmitting or receiving data; a controlling unit having the first cell type and processing the data; and a power managing unit having a second cell type having a leakage current, having a level lower than that of the first cell type and controlling operations of the wireless communications unit and the controlling unit.

## Description

### CROSS-REFERENCE TO RELATED APPLICATIONS

This application claims the priority of Korean Patent Application Nos. 10-2012-0134506 filed on November 26, 2012, and 10-2013-0044146 filed on April 22, 2013, in the Korean Intellectual Property Office, the disclosures of which are incorporated herein by reference.

### BACKGROUND OF THE INVENTION

### Field of the Invention

The present invention relates to an integrated circuit capable of decreasing power consumption, and a mobile terminal including the same.

### Description of the Related Art

In line with increasing demand for technological ubiquity, research into systems-on-chips (SoC) for use in technologies such as a wireless personal area network (WPAN), an ultra wideband (UWB) network, a radio frequency identification (RFID) network, or the like, has been conducted. The system-on-chip (SoC) is a technology-intensive semiconductor in which a single, integrated system having several elements, such as a radio frequency (RF) circuit unit, a modem unit, a memory, a central processing unit (CPU), and the like, is implemented on a single chip. A technology-intensive semiconductor technology in which several related functions may be implemented with a single chip or a system (circuit) having several functions may be integrated in the single chip, as described above, is commonly known as a system-on-chip (SoC).

As described above, in the case in which several functional units are integrated in the single chip, each functional unit has been required to consume a low amount of power.

Furthermore, in the case of battery powered products using a system-on-chip for wireless communications, decreasing power consumption is an important factor in determining the market competitiveness of such products.

### [Related Art Document]

(Patent Document 1) Korean Patent Laid-Open Publication No. 2004-0075292
(Patent Document 2) Korean Patent Laid-Open Publication No. 2010-0128906

### SUMMARY OF THE INVENTION

An aspect of the present invention provides an integrated circuit having reduced power consumption, and a mobile terminal including the same.

Also, an aspect of the present invention provides an integrated circuit having reduced consumption of a dynamic current and a leakage current, and a mobile terminal including the same.

According to an aspect of the present invention, there is provided an integrated circuit including: a wireless communications unit having a first cell type and transmitting or receiving data; a controlling unit having the first cell type and processing the data; and a power managing unit having a second cell type having a leakage current, having a level lower than that of the first cell type and controlling operations of the wireless communications unit and the controlling unit.

The power managing unit may have a rated voltage different from those of the wireless communications unit and the controlling unit.

The rated voltage of the power managing unit may be higher than those of the wireless communications unit and the controlling unit.

The integrated circuit may further include a power supplying unit supplying a dynamic voltage having a predetermined level, capable of operating the wireless communications unit, the controlling unit, and the power managing unit to the wireless communications unit, the controlling unit, and the power managing unit.

The power supplying unit may supply the same voltage to the wireless communications unit, the controlling unit, and the power managing unit.

The power supplying unit may supply a dynamic voltage, capable of operating the power managing unit, to the power managing unit during a sleep mode thereof.

The power supplying unit may supply a voltage, lower than a rated voltage of the power managing unit, to the power managing unit during a sleep mode thereof.

According to an aspect of the present invention, there is provided a mobile terminal including: a wireless communications unit having a first cell type and transmitting or receiving data; a controlling unit having the first cell type and processing the data; and a power managing unit having a second cell type having a leakage current, having a level lower than that of the first cell type and controlling operations of the wireless communications unit and the controlling unit.

The power managing unit may have a rated voltage different from those of the wireless communications unit and the controlling unit.

The rated voltage of the power managing unit may be higher than those of the wireless communications unit and the controlling unit.

The mobile terminal may further include a power supplying unit supplying a dynamic voltage having a predetermined level, capable of operating the wireless communications unit, the controlling unit, and the power managing unit to the wireless communications unit, the controlling unit, and the power managing unit.

The power supplying unit may supply the same voltage to the wireless communications unit, the controlling unit, and the power managing unit.

The power supplying unit may supply a dynamic voltage, capable of operating the power managing unit, to the power managing unit during a sleep mode thereof.

The power supplying unit may supply a voltage, lower than a rated voltage of the power managing unit, to the power managing unit during a sleep mode thereof.

The power managing unit may include: a wakeup communications unit woken up at preset intervals to receive a wakeup signal; and an external interrupt signal unit woken up by an external interrupt signal to receive a wakeup signal.

The mobile terminal may be woken up based on the wakeup signal received by the wakeup communications unit or the external interrupt signal unit.

According to another aspect of the present invention, there is provided a method of controlling a mobile terminal including a wireless communications unit transmitting or receiving data, a controlling unit processing the data, a power managing unit controlling operations of the wireless communications unit and the controlling unit, and a power supplying unit, the method including: supplying, with the power supplying unit, a first voltage to the power managing unit in a first mode; and supplying, with the power supplying unit, a second voltage, having a level lower than the first voltage, to the power managing unit in a second mode.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block diagram of a mobile terminal according to an embodiment of the present invention;
FIG. 2 is a flow chart showing a method of controlling a mobile terminal according to the embodiment of the present invention;
FIG. 3 is a block diagram showing a configuration of an electronic shelf label; and
FIG. 4 is a block diagram showing an electronic shelf label (ESL) system-on-chip according to the embodiment of the present invention.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. Throughout the drawings, the same or like reference numerals will be used to designate the same or like elements.

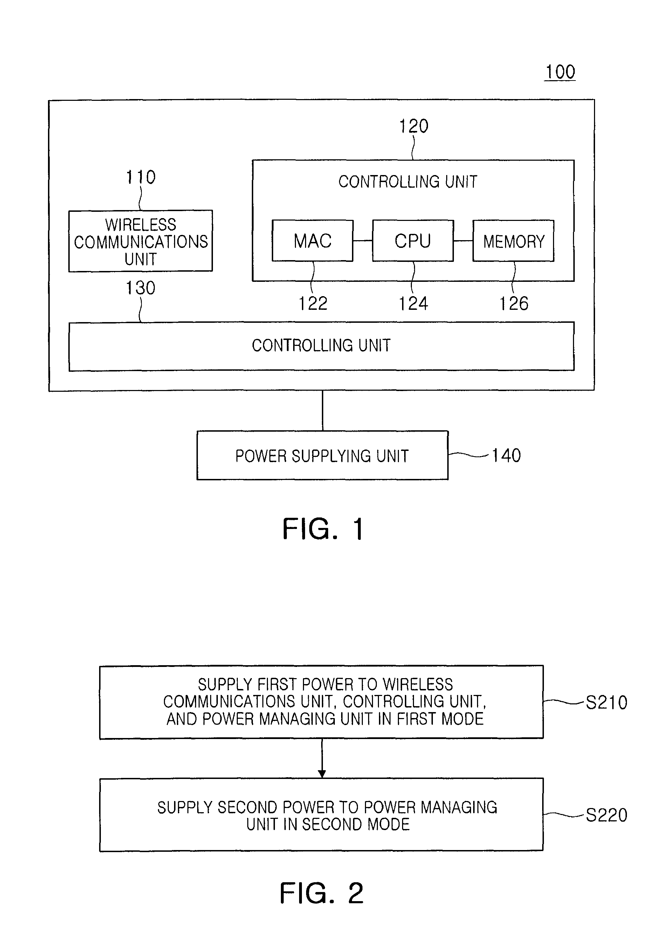

FIG. 1 is a block diagram of a mobile terminal according to an embodiment of the present invention.

Referring to FIG. 1, the mobile terminal 100 may include a wireless communications unit 110, a controlling unit 120, a power managing unit 130, and a power supplying unit 140.

The wireless communications unit 110 may transmit or receive data. In addition, the wireless communications unit 110 may include at least one module enabling communications between the mobile terminal 100 and a wireless communications system or between the mobile terminal 100 and a network in which the mobile terminal 100 is located. For example, the wireless communications unit 110 may include a mobile communications module, a wireless internet module, a short range communications module, and the like.

The mobile communicating module transmits wireless signals to or receives wireless signals from at least one of a base station, an external terminal and a server in a mobile communications network. The wireless signal may include various types of data, according to the transmission or reception of an audio call signal, a video call signal, or a text/multimedia message.

The wireless Internet module, which indicates a module for a wireless Internet access, may be disposed in the interior or on the exterior of the mobile terminal 100. As the wireless Internet technology, wireless LAN (WLAN) (Wi-Fi) technology, wireless broadband (Wibro) technology, world interoperability for microwave access (Wimax) technology, high speed downlink packet access (HSDPA) technology, or the like, may be used.

The short range communications module indicates a module for short range communications. As a short range communications technology, Bluetooth technology, radio frequency identification (RFID) technology, infrared data association (IrDA) technology, ultra wideband (UWB) technology, ZigBee technology, or the like, may be used.

The controlling unit 120 may receive, analyze, and process the data received by the mobile terminal 100. For example, the controlling unit 120 may include a media access control (MAC) processing unit 122, a central processing unit (CPU) 124, and a memory 126.

The MAC processing unit 122 may analyze a structure of a transmitted data frame to approve a frame and sense an error to determine whether or not the data frame needs to be retransmitted, when digital processing of a PHY layer ends.

The central processing unit 124 may receive, analyze, and process the data processed by the MAC processing unit 122.

The memory 126 may store a program for operating the controlling unit 120 therein or store input/output data therein.

The power managing unit 130 may control operations of the wireless communications unit 110 and the controlling unit 120. More specifically, the power managing unit 130 may turn driving of the wireless communications unit 110 and the controlling unit 120 on and off.

For example, the power managing unit 130 may control the wireless communications unit 110 to receive power from the power supplying unit if necessary and block the power supplied to the wireless communications unit 110 if necessary. Likewise, the power managing unit 130 may control the controlling unit 120 to receive power from the power supplying unit if necessary and block the power supplied to the controlling unit 120 if necessary.

Generally, since the power managing unit 130 controls the supply of the power to the respective components of the mobile terminal 100, the power managing unit 130 may be turned on in the case in which the mobile terminal 100 is turned on.

The power supplying unit 140 may supply power having a predetermined level to the wireless communications unit 110, the controlling unit 120, and the power managing unit 130.

More specifically, the power supplying unit 140 may supply power required for driving the wireless communications unit 110. For example, the power supplying unit 140 may supply a dynamic voltage to the wireless communications unit 110. Here, the dynamic voltage refers to a voltage capable of driving the wireless communications unit 110.

In addition, the power supplying unit 140 may supply power required for driving the controlling unit 120. For example, the power supplying unit 140 may supply a dynamic voltage to the controlling unit 120. Here, the dynamic voltage refers to a voltage capable of driving the controlling unit 120.

In addition, the power supplying unit 140 may supply power required for driving the power managing unit 130. For example, the power supplying unit 140 may supply a dynamic voltage to the power managing unit 130. Here, the dynamic voltage refers to a voltage capable of driving the power managing unit 130.

That is, the power supplying unit 140 may supply power having a predetermined level capable of driving all of the wireless communications unit 110, the controlling unit 120, and the power managing unit 130.

The respective components are described herein as being divided, based on roles played thereby, and do not need to be physically separated from each other in terms of hardware.

In addition, the plurality of components described above may be configured as a single integrated circuit. That is, the wireless communications unit 110, the controlling unit 120, the power managing unit 130, and the power supplying unit 140 may be implemented in a system-on-chip (SoC) if necessary.

Generally, since the mobile terminal is driven by a battery, it is very important to decrease power consumption of the mobile terminal at during driving thereof. For example, an electronic shelf label (ESL) terminal used in an ESL system may be driven by a battery.

In addition, according to a mobile terminal system, there may be a mobile terminal mainly operated in a sleep mode. For example, the electronic shelf label (ESL) terminal used in the ESL may be maintained in the sleep mode for 90% of the time. In this case, it is very important to decrease power consumption of the mobile terminal in the sleep mode.

More specifically, in the mobile terminal maintained in the sleep mode in the high ratio as described above, it is important to decrease power consumption of the power managing unit. Since the power managing unit wakes up the respective components of the mobile terminal, it needs to be turned on, even in the sleep mode.

For example, although the wireless communications unit 110 and the controlling unit 120 may be turned off in the sleep mode, the power managing unit 130 may be turned on in order to wake up the wireless communications unit 110 and the controlling unit 120. Therefore, it is important to decrease the power consumption of the power managing unit 130.

According to the embodiment of the present invention, the power managing unit 130 may have a rated voltage different from that of the wireless communications unit 110, that of the controlling unit 120, and that of the power supplying unit 140.

More specifically, the rated voltage of the power managing unit 130 may be higher than that of the wireless communications unit 110, that of the controlling unit 120, and that of the power supplying unit 140.

The wireless communications unit 110, the controlling unit 120, and the power supplying unit 140 may be formed based on a first cell library.

The cell library may be an aggregate of logical circuits (cells) pre-registered in a database, or the like, of a computer, by optimally designing the logical circuits created by a combination of basic circuits.

The first cell library may include a cell having a first rated voltage.

Meanwhile, the power managing unit 130 may be formed based on a second cell library.

The second cell library may include a cell having a second rated voltage.

The second rated voltage may be higher than the first rated voltage.

Therefore, the rated voltage of the power managing unit 130 may be higher than that of the wireless communications unit 110, that of the controlling unit 120, and that of the power supplying unit 140.

A current (a dynamic current) consumed while operating a cell (a second cell type) included in the second cell library may be lower than a current (a dynamic current) consumed while operating a cell (a first cell type) included in the first cell library. More specifically, the dynamic current consumed by the second cell type (for example, a 3V cell) may be lower than the dynamic current consumed by the first cell type (for example, a 1.8V cell) by about 30 %.

In addition, in the case in which an apparatus is operated by the first cell type and in the case in which an apparatus is operated by the first cell type, a leakage current generated in the second cell type may be lower than a leakage current generated in the first cell type. More specifically, the leakage current in the second cell type (for example, a 3V cell) may be lower than the leakage current in the first cell type (for example, a 1.8V cell) by about 75%.

The reason is that a thin gate having a gate thickness thinner than that of the second cell type is used in the first cell type in order to implement a low voltage when comparing the first cell type and the second cell type with each other. In this case, since the first cell type has insulating properties lower than those of the second cell types in which a gate thicker than the first cell type is used, the first cell type may have a relatively high leakage current.

Meanwhile, the second cell type may have a volume larger than that of the first cell type. However, since an occasion in which the power managing unit 130 used in the mobile terminal occupies the entire integrated circuit is very low, even in the case in which only the power managing unit 130 is configured by the second cell type, it does not have a large effect on a chip size.

In addition, the second cell type may have an operating speed slower than that of the first cell type. However, since the operating speed in the power managing unit 130 used in the mobile terminal is not an important element, it does not have a large effect on performance of the mobile terminal.

Therefore, in the case in which the wireless communications unit 110, the controlling unit 120, and the power supplying unit 140 are formed of the first cell type and the power managing unit 130 is formed of the second cell type, power consumption may be significantly decreased while an effect (an increase in a volume and a decrease in a speed of the SoC) on the mobile terminal is significantly decreased.

FIG. 2 is a flow chart showing a method of controlling a mobile terminal according to the embodiment of the present invention.

Referring to FIG. 2, the power supplying unit 140 may supply first power to the wireless communications unit 110, the controlling unit 120, and the power managing unit 130 in a first mode (S210). The first mode refers to a wakeup mode of the mobile terminal.

The first power may be a dynamic voltage capable of operating the wireless communications unit, the controlling unit, and the power managing unit. The dynamic voltages supplied to the wireless communications unit, the controlling unit, and the power managing unit, respectively, by the power supplying unit may be the same as each other.

For example, the first power may be lower than the rated voltages of the wireless communications unit 110 and the controlling unit 120. In addition, the first power may be equal to or lower than the rated voltage of the power managing unit 130. For example, in the case in which the power managing unit is formed by a 1.8V library cell, the first power may be 1.8V.

As described above, the power supplying unit 140 supplies a voltage, having a level lower than the rated voltage of the power managing unit 130, whereby consumption of a leakage current and a dynamic current of the power managing unit 130 may be decreased.

In addition, according to the embodiment of the present invention, the power supplying unit 140 may supply second power to the power managing unit 130 in a second mode (S220).

Here, the second mode may be a sleep mode. In addition, the second power may be lower than the rated voltage of the power managing unit 130. For example, in the case in which the power managing unit is formed by the 1.8V library cell, the second power may be 1.5V to 1.8V.

That is, in the sleep mode, the power supplying unit varies a voltage supplied to the power managing unit, whereby the leakage current and the dynamic current of the power managing unit 130 may be further decreased.

Hereinafter, a power consumption decrease effect according to the embodiment of the present invention will be described in detail with reference to the case in which the ESL terminal SoC of the ESL is configured of the first cell type and the second cell type.

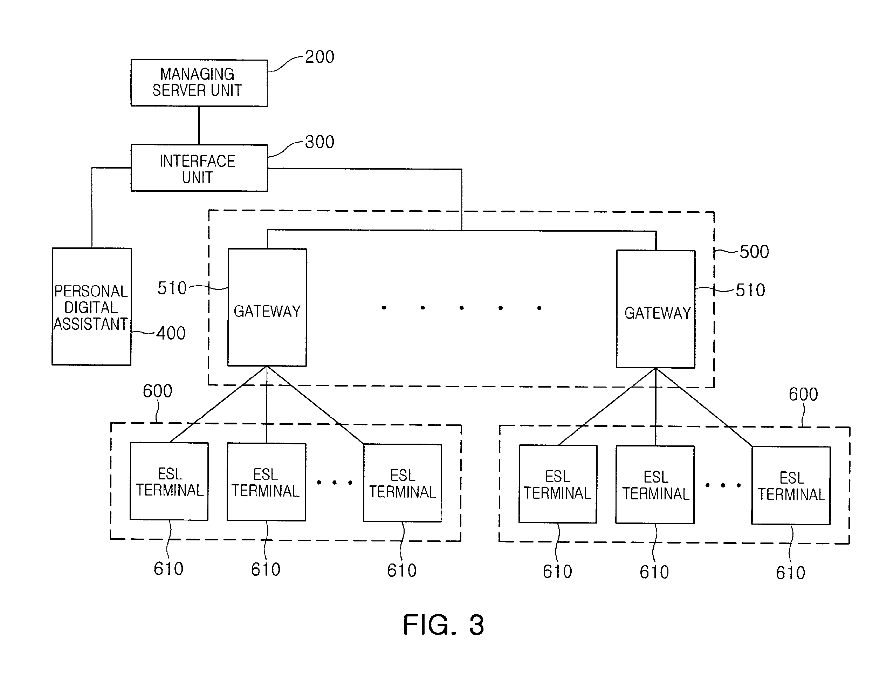

FIG. 3 is a block diagram showing a configuration of an electronic shelf label.

As shown in FIG. 3, the ESL may include a managing server unit 200, an interface unit 300, a gateway unit 500, and an ESL tag unit 600.

The managing server unit 200 may be implemented by a database server storing and managing product information related to products on display in a retail location. The managing server unit may store various pieces of information required for operating the retail store as well as the information related to goods therein. In addition, the managing server unit 200 may write and manage a command message for performing various functions such as synchronization, updates, information changes, and the like, of the product information displayed on ESL terminals 610. To this end, the managing server unit 200 may include a database for the ESL terminals 610 and the product information displayed on the ESL terminals 610. That is, the managing server unit 200 may include a database in which identification information on the ESL terminals 610 and the product information displayed on the corresponding ESL terminals are stored together with each other.

The interface unit 300 may serve to form a communications channel between the managing server unit 200 and the gateway unit 500 so that the command message (for example, a product information update message, a product information change message, a managing information acquiring message, and the like) generated by the managing server unit 200 may be transmitted to the gateway unit 500 in real time. For example, the interface unit 300 may serve to configure the message generated by the managing server 200 as a packet appropriate for a preset communications scheme used in communications with the gateway unit 500 and transmit the message. In addition, the interface unit 300 may receive an acknowledge (ACK) message transferred from the gateway unit 500 in a preset communications scheme, convert the ACK message into a message that may be received by the managing server unit 200, and transfer the message to the managing server unit 200, thereby allowing subsequent operations to be performed.

The gateway unit 500 may include a plurality of gateways 510 communicating with the managing server unit 200. The gateway 510 of the gateway unit 500 may serve to analyze data received from the managing server unit 200 to confirm whether messages or data to be transferred to the ESL terminal 610 with which the gateway 510 communicates are present and transfer the confirmed messages or data to the corresponding ESL terminal 610. The gateway 510 may configure the message to be transferred to the ESL terminal 610 as a packet according to a preset communications scheme and transmit the message to the ESL terminal 610. In addition, the gateway 510 may transfer an ACK message received from the ESL terminal 610 to the server. As a communications method between the gateway 510 and the ESL terminal 610, a wireless communications method in a ZigBee (that is, IEEE 802.15.4) scheme may be used so that a large number of ESL terminals 610 may perform communications through a single gateway 510.

The ESL tag unit 600 may include a plurality of ESL terminals 610 displaying data on the product information received from the gateway 510 on a display and transmitting an operation result according to data reception to the gateway 510. The plurality of ESL terminals 610 included in a single ESL tag unit 600 may communicate with a single gateway 510. As described above, the wireless communication method in a ZigBee scheme may be used so that communications between the single gateway 510 and the plurality of ESL terminals 610 are possible. For more efficient implementation, communications may between the gateway and the ESL terminals may occur in a state in which channels are divided into two channels, that is, a wakeup channel and a data channel.

The wakeup channel refers to a communications channel for transmitting a wakeup channel in which whether or not data to be received is present. In addition, the data channel refers to a communications channel for transmitting data actually used in the display.

Since the ESL tag unit 600 may be disposed in an environment in which it is difficult to receive a continual supply of external power, it may receive power supplied by a battery. Therefore, it is important to significantly decrease power consumption in order to be able to use the ESL tag unit for an extended period of time, such as several years or more, with a single battery replacement. To this end, the ESL tag unit may be mainly operated in a wakeup scheme. That is, the ESL terminal 610 may be woken up at preset intervals to confirm whether data to be received by the ESL terminal 610 is present. Alternatively, the ESL terminal 610 may be woken up by an external interrupt signal to whether data to be received by the ESL terminal 610 is present. Here, in the case in which it is confirmed that the data to be received by the ESL terminal 610 is not present, the ESL terminal 610 may be operated in a sleep mode to significantly decrease power consumption up to the next wakeup period. That is, only in the case in which it is confirmed that the data to be received by the ESL terminal 610 is not present, may the ESL terminal 610 be operated to supply the power to a predetermined functional unit to receive and process the data.

Here, the sleep mode refers to a state in which required power is supplied to only some of the components of the ESL terminal 610 required to confirm whether or not the data to be received is present. In addition, a normal mode refers to a state in which an amount of power sufficient to normally operate the components of the ESL terminal 610 is supplied thereto.

Meanwhile, in the ESL system, since the ESL terminal is mainly operated in the sleep mode, demand for technology for decreasing power consumption in the sleep mode has increased.

A mobile terminal according to another embodiment of the present invention may further include a personal digital assistant (PDA) 400 through which a user may directly communicate with the managing server unit 200. The personal digital assistant (PDA) 400 may transfer data input by a user to the managing server unit 200. The data input by the user may be associated with displayed products and synchronization with an ESL terminal displaying product information on the displayed products. Alternatively, the input of the user may be an input for inactivation between products that are currently being displayed and an ESL terminal synchronized with the products.

Hereinafter, an ESL system-on-chip included in the ESL terminal 510 will be described in more detail.

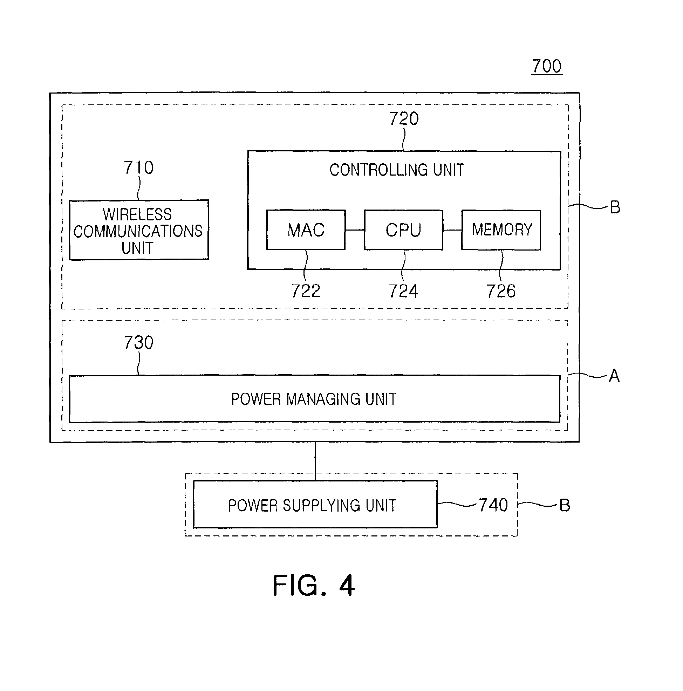

FIG. 4 is a block diagram showing an electronic shelf label (ESL) system-on-chip according to the embodiment of the present invention.

The ESL system-on-chip 700 may include a wireless communications unit 710, a controlling unit 720, a power managing unit 730, a power supplying unit 740, and the like. Since components shown in FIG. 4 are not necessary components, an ESL system-on-chip having more or less components may also be implemented.

The wireless communications unit 710 may manage a function for enabling wireless communications between the ESL terminal and the gateway 510. For example, the wireless communications unit 710 may receive updated product information from the gateway 510.

The updated product information may include information regarding whether or not the product information displayed on the ESL terminal has been updated, updated pricing information, and the like.

The controlling unit 720 may receive, analyze, and process the data received by the wireless communications unit 710. For example, in the case in which the wireless communications unit 710 receives the update data for the product information and the controlling unit 720 processes the update data, the controlling unit 720 may obtain the information on whether or not the product information has been updated, updated pricing information, and the like.

The controlling unit may include a media access control (MAC) processing unit 722, a central processing unit (CPU) 724, and a memory 726.

The MAC processing unit 722 may analyze a structure of a transmitted data frame to approve a frame and sense an error to determine whether or not the data frame needs to be retransmitted, when a digital process of a PHY layer ends.

The central processing unit 724 may receive, analyze, and process the data processed by the MAC processing unit 722.

The memory 730 may store a program for an operation of the controlling unit 720 therein or store input/output data (for example, product information, product information update data, data processed in the controlling unit, and the like) therein.

The power supplying unit 740 may supply power required for driving the wireless communications unit 710, the controlling unit 720, and the power managing unit 730. For example, the power supplying unit 740 may supply a dynamic voltage to the wireless communications unit 710, the controlling unit 720, and the power managing unit 730. In a general mode, the dynamic voltages supplied to the wireless communications unit 710, the controlling unit 720, and the power managing unit 730, respectively, by the power supplying unit may be the same as each other.

The power managing unit 730 may control the wireless communications unit 710 and the controlling unit 720. For example, the power managing unit 730 may turn the wireless communications unit 710 on or off. In addition, the power managing unit 730 may turn the controlling unit 720 on or off.

Further, the power managing unit may include a wakeup communications unit and an external interrupt signal unit. The wakeup communications unit may be woken up at preset intervals to receive a wakeup signal of the ESL terminal. The external interrupt signal unit may be woken up by an external interrupt signal to receive a wakeup signal.

Meanwhile, the ESL terminal may be woken up based on the wakeup signal received by the wakeup communications unit or the external interrupt signal unit.

According to the embodiment of the present invention, the power managing unit 730 may have a rated voltage different from those of the wireless communications unit 710, the controlling unit 720, and the power supplying unit 740.

In addition, the rated voltage of the power managing unit 730 may be higher than that of the power supplying unit 740.

For example, the wireless communications unit 710, the controlling unit 720, and the power supplying unit 740 may be formed based on a first cell library.

According to the embodiment of the present invention, the first cell library may include a cell having a rated voltage of 1.8V.

In addition, the power managing unit 730 may be formed based on a second cell library.

According to the embodiment of the present invention, the second cell library may include a cell having a rated voltage of 3V.

In the above-mentioned scheme, the rated voltages of the wireless communications unit 710, the controlling unit 720, and the power supplying unit 740 may be 1.8V. In addition, the rated voltage of the power managing unit 730 may be 3V.

As described above, the power managing unit 730 may generally be operated in the sleep mode. Therefore, in order to decrease power consumption in the sleep mode, it is important to decrease a leakage current and a dynamic current in the power managing unit.

Generally, a 3V library cell may consume a current less dynamic than a 1.8V library cell by 30% and consume a leakage current less dynamic than the 1.8V library cell by about 75%.

Therefore, the power managing unit 730 used for the longest period of time may be formed by the 3V library cell to promote a decrease in the power consumption of the ESL terminal.

Meanwhile, although the 3V library cell may be two or more times larger than the 1.8V library cell, an occupancy area of the power managing unit may be less than 1% of the overall chip size, such that the overall chip size may not be significantly increased.

A power decrease effect in the case in which the wireless communications unit 710, the controlling unit 720, and the power supplying unit 740 represented by a region B are formed by the 1.8V library cell and the power managing unit 730 represented by a region A is formed by the 3V library cell as compared with the case in which all components are formed by the 1.8V library cell will be described with reference to FIG. 4.

Generally, the 3V library cell may consume a less dynamic current than the 1.8V library cell by 30% and consume a less leakage current than the 1.8V library cell by about 75%.

Furthermore, when a voltage of 1.8V is supplied by the power managing unit implemented by the 3V library cell, the consumption of the dynamic current may be decreased by 40%, and the consumption of the leakage current may be decreased by 80%.

In addition, the power managing unit 730 represented by the region A may be driven by a voltage, having a level lower than the rated voltage thereof. Therefore, the power supplying unit 740 may apply the voltage, having a level lower than the rated voltage of the power managing unit 730 to the power managing unit 730 to drive the power managing unit 730. In this case, the power consumption may be further decreased.

That is, in the case in which the power supplying unit 740 applies the voltage, having a level lower than the rated voltage of the power managing unit, to the power managing unit 730 in the sleep mode, the power consumption may be decreased. More specifically, in the case in which the power supplying unit 740 supplies a voltage of 1.5V to the power managing unit, the consumption of the dynamic current may be decreased by 40%, and the consumption of the leakage current may be decreased by 80%.

The methods according to the embodiments of the present invention may be used separately from or in combination with each other. In addition, operations configuring the respective embodiments may be used separately from or in combination with operations configuring other embodiments.

In addition, the methods described here above may be implemented in a recording medium that is readable by a computer or a device similar thereto using, for example, software, hardware, or a combination thereof.

With hardware implementation, the methods described here above may be implemented using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units for performing functions.

With software implementation, procedures and functions described in the present specification may be implemented by separate software modules. The software modules may be implemented by software code written in an appropriate programming language. The software code may be stored in a memory or executed by a processor.

As set forth above, according to the embodiment of the present invention, an integrated circuit capable of decreasing power consumption, and a mobile terminal including the same may be provided.

In addition, according to the embodiment of the present invention, an integrated circuit capable of decreasing consumption of a dynamic current and a leakage current, and a mobile terminal including the same may be provided.

While the present invention has been shown and described in connection with the embodiments, it will be apparent to those skilled in the art that modifications and variations can be made without departing from the spirit and scope of the invention as defined by the appended claims.

## Claims

1. An integrated circuit comprising:
a wireless communications unit having a first cell type and transmitting or receiving data;
a controlling unit having the first cell type and processing the data; and
a power managing unit having a second cell type having a leakage current, having a level lower than that of the first cell type and controlling operations of the wireless communications unit and the controlling unit.

2. The integrated circuit of claim 1, wherein the power managing unit has a rated voltage different from those of the wireless communications unit and the controlling unit.

3. The integrated circuit of claim 2, wherein the rated voltage of the power managing unit is higher than those of the wireless communications unit and the controlling unit.

4. The integrated circuit of claim 1, further comprising a power supplying unit supplying a dynamic voltage having a predetermined level, capable of operating the wireless communications unit, the controlling unit, and the power managing unit to the wireless communications unit, the controlling unit, and the power managing unit.

5. The integrated circuit of claim 4, wherein the power supplying unit supplies the same voltage to the wireless communications unit, the controlling unit, and the power managing unit.

6. The integrated circuit of claim 4, wherein the power supplying unit supplies a dynamic voltage, capable of operating the power managing unit, to the power managing unit during a sleep mode thereof.

7. The integrated circuit of claim 4, wherein the power supplying unit supplies a voltage, lower than a rated voltage of the power managing unit, to the power managing unit during a sleep mode thereof.

8. A mobile terminal comprising:
a wireless communications unit having a first cell type and transmitting or receiving data;
a controlling unit having the first cell type and processing the data; and
a power managing unit having a second cell type having a leakage current, having a level lower than that of the first cell type and controlling operations of the wireless communications unit and the controlling unit.

9. The mobile terminal of claim 8, wherein the power managing unit has a rated voltage different from those of the wireless communications unit and the controlling unit.

10. The mobile terminal of claim 9, wherein the rated voltage of the power managing unit is higher than those of the wireless communications unit and the controlling unit.

11. The mobile terminal of claim 8, further comprising a power supplying unit supplying a dynamic voltage having a predetermined level, capable of operating the wireless communications unit, the controlling unit, and the power managing unit to the wireless communications unit, the controlling unit, and the power managing unit.

12. The mobile terminal of claim 11, wherein the power supplying unit supplies the same voltage to the wireless communications unit, the controlling unit, and the power managing unit.

13. The mobile terminal of claim 8, wherein the power managing unit includes:
a wakeup communications unit woken up at preset intervals to receive a wakeup signal; and
an external interrupt signal unit woken up by an external interrupt signal to receive a wakeup signal.

14. The mobile terminal of claim 13, wherein the mobile terminal is woken up based on the wakeup signal received by the wakeup communications unit or the external interrupt signal unit.

15. A method of controlling a mobile terminal including a wireless communications unit transmitting or receiving data, a controlling unit processing the data, a power managing unit controlling operations of the wireless communications unit and the controlling unit, and a power supplying unit, the method comprising:
supplying, with the power supplying unit, a first voltage to the power managing unit in a first mode; and
supplying, with the power supplying unit, a second voltage, having a level lower than the first voltage, to the power managing unit in a second mode.
